Europäisches Patentamt

European Patent Office

Office européen des brevets

(11) Numéro de publication : **0 056 772**
**B1**

# (12) FASCICULE DE BREVET EUROPÉEN

(45) Date de publication du fascicule du brevet :
21.11.85

(21) Numéro de dépôt : 82400096.2

(22) Date de dépôt : 19.01.82

(51) Int. Cl.⁴ : **G 01 N 29/00, G 01 H 13/00**

(54) Appareil de contrôle de résonance.

(30) Priorité : 20.01.81 FR 8100937

(43) Date de publication de la demande :
28.07.82 Bulletin 82/30

(45) Mention de la délivrance du brevet :
21.11.85 Bulletin 85/47

(84) Etats contractants désignés :
AT BE CH DE GB IT LI NL SE

(56) Documents cités :
FR-A- 2 032 956
FR-A- 2 356 915

(73) Titulaire : SOCIETE BRETONNE DE FONDERIE ET DE
MECANIQUE (SBFM)
Zone Industrielle de Kerpont-Caudan
F-56600 Lanester (FR)
Société Sydel
rue de Gaillec Zone Industrielle de Keryado
F-56100 Lorient (FR)

(72) Inventeur : Jacob, Michel
5, rue Dusel
F-56700 Hennebont (FR)
Inventeur : Le Stunff, Jean-Yves
Kercroch
F-56700 Hennebont (FR)
Inventeur : Le Mouillour, Denis
2, cité des Lilas
F-56650 Inzinzac Lochrist (FR)
Inventeur : Jaquen, Noël
302, Jean-Baco
F-56600 Lorient (FR)

(74) Mandataire : Srour, Elie
REGIE NATIONALE DES USINES RENAULT (S. 0804)
8 & 10 Avenue Emile Zola
F-92109 Boulogne Billancourt (FR)

## Description

La présente invention est relative à un appareil d'analyse et de comparaison du spectre sonore émis par une pièce dont on veut évaluer la qualité du matériau la constituant.

Dans le cas d'une pièce de fonderie, le contrôle par résonance permet de déterminer :

le taux de nodularité d'une pièce en fonte à graphite sphéroïdal ;

la structure de pièces en fonte malléable ;

la présence de défaut.

Le brevet français 2.032.956 décrit un procédé et un dispositif de contrôle non destructif de la condition structurale d'échantillons au moyen de la conversion des vibrations produites par un choc en signaux électriques, du comptage d'une part des oscillations pendant des périodes sélectives et d'autre part de la fréquence des signaux détectés en vue de mesurer la fréquence de résonance. Ce dispositif ne permet pas d'effectuer la mesure sur plusieurs alternances, il ne permet pas d'éliminer les mesures extrêmes avant de faire la moyenne, d'où l'impossibilité d'utiliser l'appareil pour le contrôle de pièces à faible surtension.

Le brevet français 2.356.915, décrit principalement un appareil de laboratoire destiné notamment au contrôle de pièce unique ou en nombre limité et plus particulièrement de pièces à fortes surtensions.

Afin de remédier aux inconvénients précités des dispositifs de l'art antérieur, la présente invention propose un appareil d'analyse et de comparaison du spectre sonore émis par une pièce coulée dont on veut évaluer la qualité du matériau la constituant et dont on provoque la résonance en la frappant, comportant un capteur du signal audible émis par la pièce, des moyens pour traiter le signal prélevé par le capteur ; des moyens de comparaison du niveau du signal prélevé avec un niveau de détection et avec un niveau de tension fixe qui permettent de déclencher un premier moyen de comptage, caractérisé en ce que la comparaison du niveau du signal prélevé avec le niveau de détection permet de déclencher un second moyen de comptage, lesdits moyens de comptage étant connectés à un microcalculateur qui permet d'une part de déterminer la fréquence du signal prélevé par le capteur et d'autre part de calculer la moyenne des fréquences durant la période pendant laquelle le niveau du signal prélevé est au-dessus d'un niveau de mesure, auquel il est comparé par un moyen de comparaison additionnel.

D'autres caractéristiques ressortiront de la description qui suit et qui n'est donnée qu'à titre d'exemple. A cet effet, on se reportera aux dessins joints dans lesquels :

la figure 1 est un synoptique de l'ensemble de l'appareil suivant l'invention représenté sous la forme de schémas-blocs ;

la figure 2 est un synoptique de la carte de mesure utilisée dans l'appareil de la figure 1 ; et

la figure 3 est un chronogramme des signaux apparaissant aux points essentiels de l'appareil de la figure 1 et qui permet d'en expliciter le fonctionnement.

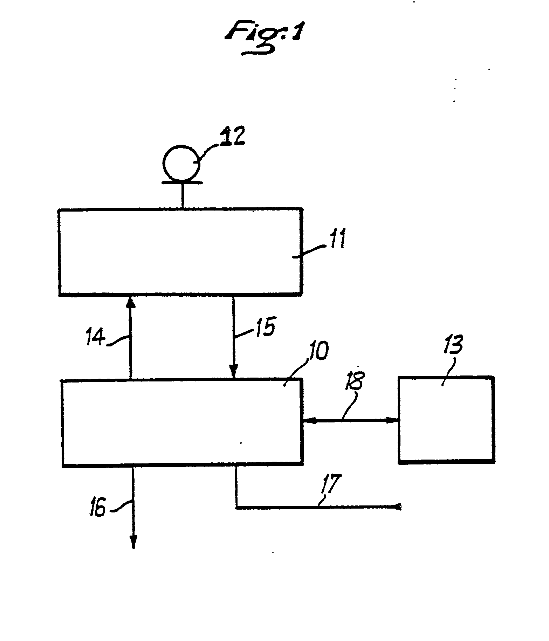

Suivant la représentation de la figure 1, l'appareil de contrôle de résonance comporte un microprocesseur 10 connecté à une carte de mesure 11 par un conducteur aller 14 et un conducteur de retour 15. Ladite carte de mesure 11 et par ailleurs connectée à un capteur 12 de signal sonore qui est par exemple un microphone. Le microprocesseur 10 est relié à un clavier de visualisation 13 par un bus 18 renfermant des conducteurs dans les deux sens. Un conducteur d'entrée 17 sert au déclenchement du microprocesseur 10 tandis qu'un conducteur de sortie 16 à partir du microprocesseur 10 transmet les informations de commande de pièce bonne ou mauvaise.

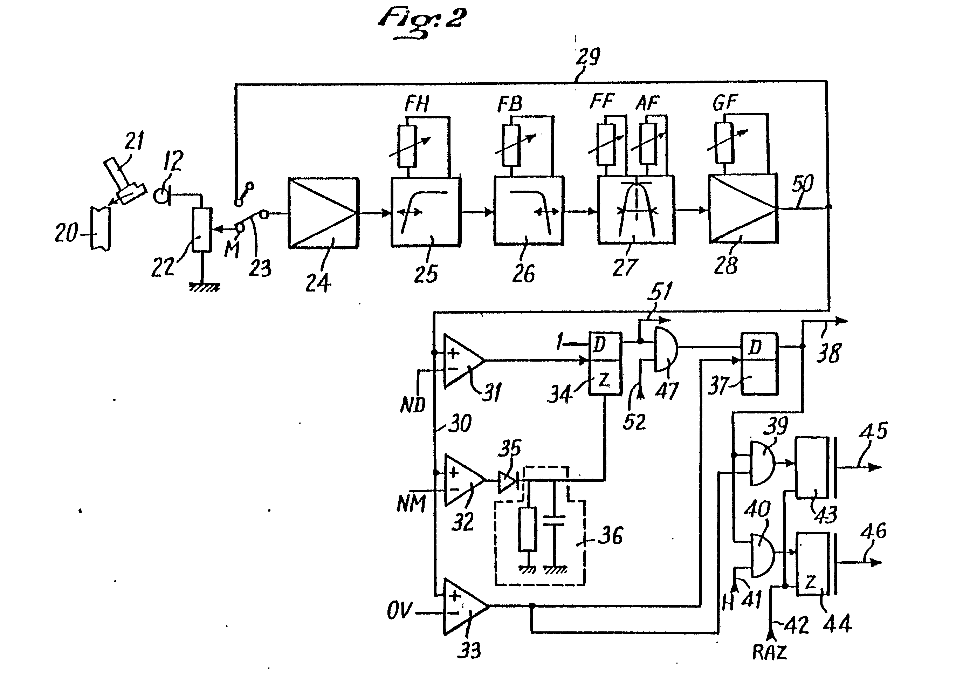

La figure 2 représente un mode de réalisation de la carte électronique de mesure 11 de la figure 1. On a représenté une pièce 20 que l'on peut heurter à l'aide d'un marteau 21 à proximité immédiate du micro 12 figurant déjà à la figure 1. Le microphone 12 est connecté par sa sortie à la masse par l'entremise d'un potentiomètre 22 dont la prise mobile est reliée à l'une des bornes d'un interrupteur 23, dont la borne autour de laquelle pilote le bras mobile est connectée à des moyens de traitement du signal prélevé par le microphone 12, moyens qui comprennent la connexion en série des éléments successifs suivants : un premier amplificateur 24 ; un filtre passe-haut 25 ; un filtre passe-bas 26 ; un filtre sélectif 27 dont la fréquence et la bande passante DF sont réglables ; enfin un second amplificateur 28 pour ajuster le niveau du signal. La sortie 50 de ce second amplificateur 28 est reliée d'une part par un premier conducteur 29 à la seconde borne de l'interrupteur d'entrée 23 d'autre part par un second conducteur 30 aux entrées non inverseuses de trois comparateurs 31, 32, 33 constitués par exemple par des amplificateurs opérationnels. Le premier comparateur 31 reçoit sur son entrée inverseuse un signal ND indicateur de niveau de déclenchement ; le second comparateur 32 reçoit sur son entrée inverseuse un signal NM indicateur d'un nombre minimum de mesures et le troisième comparateur 33 reçoit sur son entrée inverseuse une tension de zéro volt. La sortie du premier comparateur 31 est reliée à une entrée d'une première bascule « demande de mesure » 34 dont une sortie est reliée à une entrée d'une seconde bascule « mesure » 37 par l'intermédiaire d'une première porte logique 47 à fonction ET. La sortie de la première bascule 34 fournit l'information « demande de mesure » et la sortie 38 de la seconde bascule 37 fournit l'information « mesure ». Une seconde entrée de la porte logique 47 à fonction ET reçoit un signal « autorisation de mesure ».

La sortie du second comparateur 32 est reliée à l'entrée de remise à zéro de la première bascule 34 dite de « demande de mesure » par l'intermédiaire de la connexion en série dans le sens passant d'une diode 35 et d'un circuit 36 à constante de temps RC constitué par la connexion en parallèle d'une résistance et d'une capacité entre le conducteur et la masse.

La sortie du troisième comparateur 33 est connectée d'une part à une seconde entrée de la seconde bascule 37 dite de « mesure », d'autre part à une entrée d'une seconde porte logique 39 à fonction ET. La sortie 38 de la seconde bascule 37 fournissant l'information « mesure » est connectée en outre d'une part à la seconde entrée de ladite seconde porte logique 39 à fonction ET, d'autre part à une entrée d'une troisième porte logique 40 à fonction ET dont la seconde entrée 41 est connectée à une horloge H.

La sortie de la seconde porte logique 39 à fonction ET est reliée à l'entrée de déclenchement d'un premier compteur 43 fournissant sur sa sortie 45 une information N1, tandis que la sortie de la troisième porte logique 40 à fonction ET est reliée à l'entrée de déclenchement d'un second compteur 44 fournissant sur sa sortie 46 une information N2. Un conducteur 42 relié au microprocesseur 10 de la figure 1 est connecté en parallèle aux entrées de retour à zéro (RAZ) des deux compteurs 43 et 44.

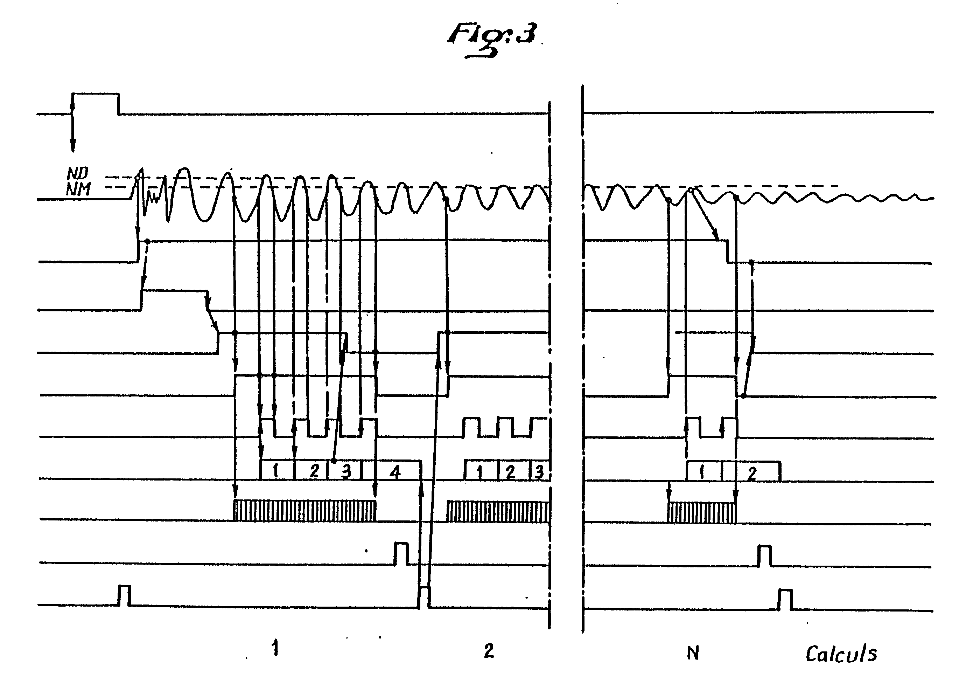

La figure 3 qui est un chronogramme des signaux apparaissant aux points essentiels de l'appareil des figures 1 et 2 représente successivement à la ligne 1, le signal de déclenchement ; à la ligne 2, le signal basse fréquence filtré sur lequel ont été figurés les niveaux des signaux ND et NM respectivement appliqués à l'entrée inverseuse des comparateurs 31 et 32 ; à la ligne 3, le signal « demande mesure » apparaissant sur la sortie de la bascule 34 ; à la ligne 4 le signal « temps d'occultation » ; à la ligne 5, le signal « autorisation de mesure » émis par le microprocesseur 10 sur la seconde entrée de la porte logique 47 à fonction ET ; à la ligne 6, le signal « mesure » apparaissant sur le conducteur de sortie 38 figure 2 ; à la ligne 7, le signal N1 apparaissant sur la sortie 45 pour le microprocesseur 10 ; à la ligne 8, la valeur globale de N1 ; à la ligne 9, le signal N2 apparaissant à la sortie 46 pour le microprocesseur 10 et correspondant au comptage des impulsions émises par l'horloge H ; à la ligne 10, les signaux correspondant à l'enregistrement de N1 et de N2 dans le microprocesseur 10 ; à la ligne 11, le signal de RAZ pour N1 et N2 sur les entrées des compteurs 43 et 44 reliées au conducteur 42 ; enfin à la ligne 12, le « nombre de mesures » auquel succèdent des calculs.

Ceci posé, l'appareil de contrôle de résonance suivant l'invention fonctionne comme suit :

Un ordre sur l'entrée 17 « déclenchement » (figure 1) met le microprocesseur 10 en attente du signal « demande mesure » par le conducteur 51 (figure 2).

Le choc du marteau 21 sur la pièce 20 produit un signal sonore qui est capté par le microphone 12. Le signal électrique qui en résulte est amplifié en 24, filtré par un passe-haut 25, un passe-bas 26, un filtre sélectif 27 dont la fréquence FF et la bande passante ΔF sont réglables. Après filtrage, un dernier amplificateur 28 permet d'ajuster le niveau du signal.

Lorsque le niveau du signal dépasse le seuil de déclenchement ND (figure 3, ligne 2), le comparateur 31 fait monter la bascule 34 « demande de mesure ». Après une temporisation d'occultation (figure 3, ligne 4), le microprocesseur 10 envoie l'ordre « autorisation de mesure » par le conducteur 52 (figure 2). Le signal basse-fréquence est détecté par le comparateur 33 qui déclenche la bascule « mesure » 37. Le signal « mesure » (ligne 6, figure 3) sur le conducteur 38 autorise le comptage des nombres d'alternances N1 par le compteur 43 et d'une horloge H, N2 par le compteur 44 (lignes 8 et 9, figure 3).

Le microprocesseur 10 surveille la sortie 45 du compteur 43. Lorsque ce compteur atteint une valeur programmée, 3 par exemple, le microprocesseur bloque l'« autorisation de mesure » par le conducteur 52 à la prochaine alternance du signal basse-fréquence ; le signal « mesure » retombe, les compteurs 43 et 44 s'arrêtent. Le microprocesseur 10 enregistre les deux valeurs N1 et N2 et remet à zéro les deux compteurs par le conducteur 42. Le microprocesseur teste ensuite le signal « demande mesure » sur le conducteur 51 et relance un nouveau cycle d'enregistrement des valeurs N1 et N2 tant que ce signal est actif.

Lorsque le signal basse-fréquence (figure 3, ligne 2) descend au-dessous de la valeur NM, niveau de mesure inférieur à la valeur ND, au niveau de détection ou de déclenchement, pendant le temps RC figuré par le réseau 36 (figure 2), la bascule « demande mesure » 34 retombe ainsi que la bascule « mesure » 37. N mesures ont ainsi été enregistrées.

Le microprocesseur 10 fait ensuite les N calculs de fréquences :

$$F = H \times N1/N2$$

Il élimine les deux résultats extrêmes et fait le calcul de la moyenne :

$$Fm = \frac{\Sigma Fi}{N - 2}$$

et de l'écart $ER = \dfrac{F\ max. - F\ min.}{Fm} \times 100$

Le résultat est comparé à la fréquence de référence FR programmée

$$DF = FR - Fm$$

3

Une pièce est considérée comme bonne si : DF est positif, N > nombre minimum de mesure programmée, et ER < ER programmé.

La mesure est considérée comme mauvaise si : N < nombre minimum programmé ou ER > ER programmé ou si le signal basse fréquence n'a pas été suffisant pour dépasser la valeur ND après le déclenchement de l'appareil pendant un temps déterminé.

A chaque mesure, le système met à jour un compteur de pièces bonnes et un compteur de pièces mauvaises.

Tous les paramètres numériques sont mémorisés et peuvent être modifiés par le clavier. L'autonomie de rétention de la mémoire est de un mois lorsque l'appareil n'est pas alimenté.

Le réglage du filtre (FF) 27 est ajusté en mettant l'interrupteur 23 en position O qui réinjecte la sortie du filtre sur son entrée, ceci permet de faire osciller le filtre sur sa fréquence centrale et de mesurer numériquement la fréquence de filtrage.

La version normale de l'appareil sort sur un contact de relais le signal pièce bonne ou mauvaise.

Une version plus élaborée possédant 16 entrées et 16 sorties de puissance permet d'automatiser une chaîne de contrôle de pièces de fonderie.

L'appareil suivant la présente invention permet donc d'analyser le spectre sonore d'un matériau afin d'en évaluer la qualité. Dans le cas des pièces de fonderie, le contrôle par résonance permet de déterminer :

le taux de nodularité d'une pièce en fonte à graphite sphéroïdal ;

la structure de pièces en fonte malléable ;

la présence de défaut.

L'affichage alphanumérique sur la console de visualisation 13 permet de visualiser simultanément :

la fréquence de référence FR,

la fréquence mesurée DF = FR − Fm,

le nombre de mesure N (quantité originale),

le nombre de pièces bonnes ou défectueuses,

la qualité de la mesure ER au pour cent d'erreur (quantité originale).

Le nombre de mesures N est intéressant pour le contrôle d'une pièce avec défaut (criques) ou lors d'un mauvais choc. L'énergie du spectre sera plus faible pour une pièce fêlée et par conséquent le nombre de mesure de la fréquence de résonance sera faible. Le nombre de mesure étant programmable, il est possible d'éliminer les pièces avec défaut si N < nombre minimum programmé.

Le nombre qui donne la qualité de la mesure est important car il permet de choisir l'endroit de choc idéal pour avoir une bonne mesure : certains endroits de la pièce ne se prêtent pas au choc : il apparaît une quantité importante d'harmoniques perturbateurs qui rendent la mesure difficile et imprécise.

## Revendications

1. Appareil d'analyse et de comparaison du spectre sonore émis par une pièce coulée dont on veut évaluer la qualité du matériau la constituant et dont on provoque la résonance en la frappant, comportant un capteur du signal audible émis par la pièce, des moyens (24-28) pour traiter le signal prélevé par le capteur (12) ; des moyens de comparaison (31, 33) du niveau du signal prélevé avec un niveau de détection (ND) et avec un niveau de tension fixe (OV) qui permettent de déclencher un premier moyen de comptage (43), caractérisé en ce que la comparaison du niveau du signal prélevé avec le niveau de détection (ND) permet de déclencher un second moyen de comptage (44), lesdits moyens de comptage (43-44) étant connectés à un microcalculateur qui permet d'une part de déterminer la fréquence du signal prélevé par le capteur (12) et d'autre part de calculer la moyenne des fréquences durant la période pendant laquelle le niveau du signal prélevé est au-dessus d'un niveau de mesure (NM), auquel il est comparé par un moyen de comparaison additionnel (32).

2. Appareil selon la revendication 1, caractérisé en ce que le moyen de comparaison (31) du signal prélevé avec le niveau de détection (ND) et le moyen de comparaison additionnel (32) sont reliés aux entrées respectives d'une bascule de demande de mesure (34), le moyen de comparaison additionnel (32) étant relié auxdites entrées respectives par l'intermédiaire d'un circuit à constante de temps RC (36).

3. Appareil selon la revendication 2, caractérisé en ce que la sortie de la bascule de demande de mesure (34) est connectée d'une part à une entrée d'une bascule de mesure (37) par l'intermédiaire d'une première porte logique (47) à fonction ET, d'autre part à une entrée (51) dudit microcalculateur (10) lequel est connecté par une sortie (52) à une seconde entrée de ladite première porte logique (47) à fonction ET pour transmettre une autorisation de mesure et en ce que l'entrée de remise à zéro de ladite bascule de mesure (37) est connectée à la sortie du moyen de comparaison (33) avec le niveau de tension fixe (OV).

4. Appareil selon la revendication 3, caractérisé en ce que la sortie du moyen de comparaison (33) avec le niveau de tension fixe (OV) est en outre connecté à l'entrée des premiers moyens de comptage (43) par l'intermédiaire d'une seconde porte logique (39) à fonction ET dont une seconde entrée est reliée à la sortie (38) de ladite bascule de mesure (37).

5. Appareil selon la revendication 4, caractérisé en ce que ladite sortie (38) de ladite bascule de mesure 37 est connectée en outre d'une part à une entrée dudit microcalculateur, d'autre part à une entrée des seconds moyens de comptage (44) par l'intermédiaire d'une troisième porte logique (40) à fonction ET dont une seconde entrée (41) est reliée à une horloge (H).

6. Appareil de contrôle de résonance suivant la revendication 5, caractérisé en ce que les sorties (45-46) desdits premier (43) et second (44) moyens de comptage sont connectées en parallèle audit microcalculateur (10) par deux entrées distinctes et en ce que ce dernier est relié par un conducteur de sortie aux entrées de remise à zéro desdits premier (43) et second (44) moyens de comptage.

## Claims

1. Apparatus for analysing and comparing the sound spectrum emitted by a cast component in respect of which the quality of the material forming same is to be evaluated and which is caused to resonate by hitting it, comprising a detector for the audible signal emitted by the component, means (24-28) for processing the signal picked up by the detector (12) ; means (31, 33) for comparing the level of the signal which is picked up with a detection level (ND) and with a fixed voltage level (OV), which means permit triggering of a first counting means (43), characterised in that comparison of the level of the signal which is picked up with the detection level (ND) permits triggering of a second counting means (44), said counting means (43-44) being connected to a microcomputer which makes it possible on the one hand to determine the frequency of the signal picked up by the detector (12) and on the other hand to calculate the average of the frequencies during the period during which the level of the signal picked up is above a measurement level (NM) to which it is compared by an additional comparison means (32).

2. Apparatus according to claim 1 characterised in that the means (31) for comparing the signal which is picked up with the detection level (ND) and the additional comparison means (32) are connected to the respective inputs of a measurement request flip-flop (34), the additional comparison means (32) being connected to said respective inputs by way of a time-constant RC circuit (36).

3. Apparatus according to claim 2 characterised in that the output of the measurement request flip-flop (34) is connected on the one hand to an input of a measurement flip-flop (37) by way of a first logic AND-gate (47) and on the other hand to an input (51) of said microcomputer (10) which is connected by an output (52) to a second input of said first logic AND-gate (47) to transmit a measurement authorisation and that the reset input of said measurement flip-flop (37) is connected to the output of the means (33) for comparison with the fixed voltage level (OV).

4. Apparatus according to claim 3 characterised in that the output of the means (33) for comparison with the fixed voltage level (OV) is also connected to the input of the first counting means (43) by way of a second logic AND-gate (39) of which a second input is connected to the output (38) of said measurement flip-flop (37).

5. Apparatus according to claim 4 characterised in that said output (38) of said measurement flip-flop (37) is also connected on the one hand to an input of said microcomputer and on the other hand to an input of the second counting means (44) by way of a third logic AND-gate (40) of which a second input (41) is connected to a clock (H).

6. A resonance testing apparatus according to claim 5 characterised in that the outputs (45-46) of said first and second counting means (43 and 44) are connected in parallel to said microcomputer (10) by two separate inputs and that the latter is connected by an output conductor to the reset inputs of said first and second counting means (43 and 44).

## Patentansprüche

1. Vorrichtung zum Analysieren und Vergleichen des von einem gegossenen Gegenstand ausgesandten Schallspektrums zur Ermittlung der Qualität des ihn bildenden Materials und dessen Resonanz durch Schlagen erzeugt wird, mit einem Fühler für das vom Gegenstand ausgesandte hörbare Signal, mit einer Anordnung (24-28) zur Verarbeitung des vom Fühler (12) aufgenommenen Signals ; mit einer Vergleicheranordnung (31, 33) für den Pegel des aufgenommenen Signals bezüglich eines Erfassungspegels (ND) und eines festen Spannungspegels (OV), die das Auslösen einer ersten Zähleranordnung (43) ermöglicht, dadurch gekennzeichnet, daß das Vergleichen des Pegels des aufgenommenen Signals mit dem Erfassungspegel (ND) das Auslösen einer zweiten Zähleranordnung (44) ermöglicht und daß die Zähleranordnungen (43-44) mit einem Mikrorechner verbunden sind, der einerseits die Messung der Frequenz des vom Fühler (12) aufgenommenen Signals ermöglicht und andererseits das Berechnen des Mittelwerts der Frequenzen während derjenigen Periode ermöglicht, während der der Pegel des aufgenommenen Signals oberhalb eines Meßpegels (NM) ist, mit dem er mittels einer zusätzlichen Vergleicheranordnung (32) verglichen wird.

2. Vorrichtung nach Anspruch 1, dadurch gekennzeichnet, daß die Vergleicheranordnung (31) für das aufgenommene Signal bezüglich des Erfassungspegels (ND) und die zusätzliche Vergleicheranordnung (32) mit dem zugehörigen Eingängen eines Meßauslöse-Flip-Flops (34) verbunden sind, wobei die zusätzliche Vergleicheranordnung (32) mit den zugehörigen Eingängen über eine RC-Zeitkonstantenschaltung (36) verbunden ist.

**0 056 772**

3. Vorrichtung nach Anspruch 2, dadurch gekennzeichnet, daß der Ausgang des Meßauslöse-Flip-Flops (34) einerseits mit einem Eingang eines Meß-Flip-Flops (37) über eine erste logische UND-Torschaltung (47) verbunden ist und andererseits mit einem Eingang (51) des Mikrorechners (10), der über einen Ausgang (52) mit einem zweiten Eingang der logischen UND-Torschaltung (47) verbunden ist um ein Meßsignal zu übertragen und daß der Rückstelleingang auf Null des Meß-Flip-Flops (37) mit dem Ausgang der Vergleicheranordnung (33) mit dem festen Spannungspegel (OV) verbunden ist.

4. Vorrichtung nach Anspruch 3, dadurch gekennzeichnet, daß der Ausgang der Vergleicheranordnung (33) mit dem festen Spannungspegel (OV) außerdem mit dem Eingang der ersten Zähleranordnung (43) über eine zweite logische UND-Torschaltung (39) verbunden ist, deren zweiter Eingang mit dem Ausgang (38) des Meß-Flip-Flops (37) verbunden ist.

5. Vorrichtung nach Anspruch 4, dadurch gekennzeichnet, daß der Ausgang (38) des Meß-Flip-Flops (37) außerdem einerseits mit einem Eingang des Mikrorechners und andererseits mit einem Eingang der zweiten Zähleranordnung (44) über eine dritte logische UND-Torschaltung (40) verbunden ist, deren zweiter Eingang (41) mit einer Uhr (H) verbunden ist.

6. Vorrichtung zur Resonanzprüfung nach Anspruch 5, dadurch gekennzeichnet, daß die Ausgänge (45-46) der ersten und zweiten Zähleranordnungen (43 und 44) parallel mit dem Mikrorechner (10) über zwei getrennte Eingänge verbunden sind und daß letzterer über eine Ausgangsleitung mit den Rückstelleingängen auf Null der ersten und zweiten Zähleranordnungen (43 und 44) verbunden ist.

Fig.1

Fig:2

Fig.3

ND
NM

1 | 2 | 3 | 4       1 | 2 | 3       1 | 2

1            2            N       Calculs

0 056 772